# EUROPEAN PATENT SPECIFICATION

(11) **EP 2 794 695 B1**
(45) Date of publication and mention of the grant of the patent: **16.03.2016**
(21) Application number: 12812935.0
(22) Date of filing: 18.12.2012
(51) Int. Cl.: C08F 214/08

(54) **PROCESS FOR THE PREPARATION OF A VINYLIDENE CHLORIDE POLYMER**
VERFAHREN FÜR DIE HERSTELLUNG EINES VINYLIDEN-CHLORID-POLYMERS
PROCÉDÉ DE PRÉPARATION D'UN POLYMÈRE DE CHLORURE DE VINYLIDÈNE

(30) Priority: 21.12.2011 EP 11306716; 27.09.2012 EP 12306170
(43) Date of publication of application: 29.10.2014
(73) Proprietor: SOLVAY SA, 1120 Bruxelles (BE); Centre National de la Recherche Scientifique (CNRS), 75794 Paris Cedex 16 (FR); Université Pierre et Marie Curie (Paris 6), 75252 Paris Cedex 05 (FR); Université Claude Bernard Lyon 1, 69100 Villeurbanne (FR)
(72) Inventor: VINAS, Jérôme, B-1060 Brussels (BE); VELASQUEZ, Emilie, F-75018 Paris (FR); DUFILS, Pierre-Emmanuel, F-39500 Tavaux (FR); RIEGER, Jutta, F-75014 Paris (FR); STOFFELBACH, François, F-94600 Choisy-le-Roi (FR); LANSALOT, Muriel, F-69100 Villeurbanne (FR); D'AGOSTO, Franck, F-69100 Villeurbanne (FR); CHARLEUX, Bernadette, F-69003 Lyon (FR); VANDERVEKEN, Yves, B-3001 Heverlee (BE)
(74) Representative: Benvenuti, Federica
(86) International application number: PCT/EP2012/075950
(87) International publication number: WO 2013/092587

(56) References cited:
- EP-A1- 1 801 100
- WO-A1-2005/028557
- SEVERAC R ET AL: "VINYLIDENE CHLORIDE COPOLYMERIZATION WITH METHYL ACRYLATE BY REVERSIBLE ADDITION-FRAGMENTATION CHAIN TRANSFER (RAFT) PROCESS", RAPRA ABSTRACTS, RAPRA TECHNOLOGY LTD., SHREWSBURY, GB, vol. 40, no. 9, 1 September 2003 (2003-09-01), page 39, XP001178507, ISSN: 0033-6750

## Description

This application claims priority to European application No. 11306716.9, filed on 21/12/2011, and to European application No. 12306170.7, filed on 27/9/2012.

### Technical Field

The invention relates to a process for preparing a vinylidene chloride polymer which comprises polymerising vinylidene chloride under the control of certain RAFT agents. The invention further relates to the vinylidene chloride polymer obtained from the process, in particular a vinylidene chloride polymer comprising at least one hydrophilic block and at least one vinylidene chloride block, and to the uses and compositions obtainable therefrom.

### Background Art

Vinylidene chloride polymers are typically prepared by a radical polymerization process, see for instance Ullmann's Encyclopedia of Industrial Chemistry. Poly(vinylidene chloride). Edited by WILEY. Weinheim: Wiley VCH-Verlag, 2005.

Over the past decade, various controlled radical polymerization techniques have been developed. Among these reversible addition fragmentation chain transfer (RAFT) and macromolecular design via inter-exchange of xanthate (MADIX) have provided an advantageous route to so-called living polymerization processes, see for instance PERRIER, S., et al. Macromolecular design via Reversible Addition-Fragmentation Chain Transfer (RAFT)/Xanthates (MADIX) polymerization. J. Polym. Sci.: Part A: Polym. Chem.. 2005, vol.43, p.5347-5393.

The use of RAFT and MADIX controlled radical polymerization agents, hereinafter referred to as "RAFT agents", has been investigated for the polymerization of acrylic and methacrylic monomers, styrenics, and dienes for instance in WO 98/058974 A (RHODIA CHIMIE) 30.12.1998 and in WO 98/01478 A (E.I. DUPONT DE NEMOURS AND COMMONWEALTH SCIENTIFIC AND INDUSTRIAL RESEARCH ORGANIZATION)

The expression "RAFT agent", which for the avoidance of doubt is intended to mean "RAFT or MADIX agent", is used in the present specification to refer to a class of compounds containing the functional group -X(=S)-S-, wherein X is phosphorous or carbon, preferably carbon. MADIX agents are characterised by the presence of the xanthate functional group, namely -O-C(=S)-S-. RAFT agents are capable to act as a reversible chain transfer agent in free-radical polymerizations, thereby inducing reversible-addition fragmentation transfer reactions to create an equilibrium between propagating radicals (i.e. the growing polymer chain) and so-called dormant species (containing the chain transfer agent fragment) that can become active again. The generally accepted mechanism of RAFT controlled radical polymerization is shown in Scheme I.

Solution polymerization of vinylidene chloride and methyl acrylate under the control of reversible chain transfer agents has been reported in WO 2009/121149 (ADVANCED POLYMERIK PTY LTD) 08.10.2009 , in SEVERAC, R., et al. Reversible addition-fragmentation chain transfer (RAFT) copolymerization of vinylidene chloride and methyl acrylate. Polymer lnternational. 2002, viol.51, p.1117-1122. and in SEVERAC, R., et al. Vinylidene chloride copolymerization with methyl acrylate by reversible addition-fragmentation chain transfer (RAFT) process. RAPRA Abstracts. 2003, vol.40, no.9, p.39.

Solution polymerization in benzene of vinylidene chloride, methyl acrylate and a phosphonated methacrylate or of vinylidene chloride, methyl acrylate and hydroxyethyl acrylate under the control of a dithioester RAFT reversible chain transfer agent was reported in RIXENS, B., et al. Synthesis of phosphonated copolymers with tailored architechture by reversible addition-fragmentation chain transfer polymerization (RAFT). J. Polym. Sci.: PartA: Polym. Chem.. 2006, vo1.44, p.13-24.

Solution polymerization in benzene of vinylidene chloride, methyl acrylate and 1H,1H,2H,2H-perfluorodecyl acrylate under the control of a dithioester RAFT agent was reported in RIXENS, B., et al. Migration of additives in polymer coatings: fluorinated additives and poly(vinylidene chloride)-based matrix. Polymer. 2005, vol.46, p.3579-3587.

Solution polymerization in butyl acetate of vinylidene chloride, butyl acrylate under the control of a trithiocarbonate RAFT agent was reported in MOAD, G., et al. Living radical polymerization by the RAFT process. Aust. J. Chem.. 2005, vol.58, p.379-410.

None of these documents however disclose the preparation of vinylidene chloride polymers under the control of reversible chain transfer agents of formula (II) as defined here below.

Additionally, none of these documents disclose a process different from a solution polymerization process for the preparation of vinylidene chloride polymers under the control of reversible chain transfer agents.

### Summary of invention

Thus a first objective of the present invention is to provide a process for the preparation of a vinylidene chloride polymer under the control of a

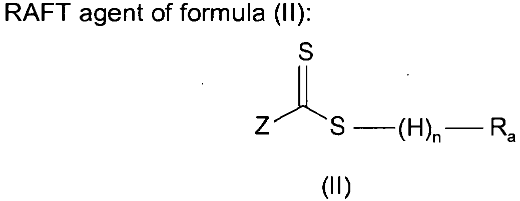

where Rₐ is an organic group optionally substituted with one or more hydrophilic groups; wherein -(H)*ₙ*- represents at least one polymer chain formed by any mechanism which is hydrophilic and comprises recurring units deriving from at least one ethylenically unsaturated monomer having hydrophilic character (h1) and comprising either cationic, anionic or non-ionic functional groups imparting said hydrophilic character and optionally from at least one ethylenically unsaturated monomer having hydrophobic character (h2) and n is an integer from 2 to 300; and Z is selected from the group consisting of optionally substituted alkoxy, optionally substituted aryloxy, optionally substituted heterocyclyl, optionally substituted alkylthio, optionally substituted arylalkylthio, dialkoxy- or diaryloxy- phosphinyl [-P(=O)(OR⁴)₂], dialkyl- or diaryl- phosphinyl [-P(=O)R⁴₂], where R⁴ is selected from the group consisting of optionally substituted C₁-C₁₈ alkyl, optionally substituted C₂-C₁₈ alkenyl, optionally substituted aryl, optionally substituted heterocyclyl, optionally substituted aralkyl, optionally substituted alkaryl, optionally substituted acylamino, optionally substituted acylimino, optionally substituted amino, a polymer chain formed by any mechanism; optionally substituted alkyl, preferably optionally substituted C₁-C₂₀ alkyl, optionally substituted aryl, and optionally substituted arylalkyl.

A second objective of the present invention is a vinylidene chloride block polymer obtainable by the process of the first object which comprises at least one hydrophilic block and at least one vinylidene chloride block.

Further objectives of the present invention are a composition comprising the vinylidene chloride block polymer of the second objective, its uses and the articles obtainable therefrom.

### Description of invention

According to a first object of the present invention there is provided a process for the preparation of a vinylidene chloride polymer comprising polymerizing vinylidene chloride and optionally at least one ethylenically unsaturated monomer copolymerizable with vinylidene chloride, under the control of a RAFT agent of formula (II) to form a vinylidene chloride polymer: 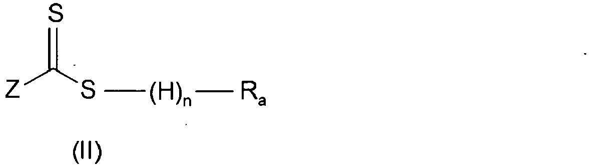 where Rₐ is an organic group optionally substituted with one or more hydrophilic groups; group -(H)ₙ- represents at least one polymer chain formed by any mechanism; and Z is selected from the group consisting of optionally substituted alkoxy, optionally substituted aryloxy, optionally substituted heterocyclyl, optionally substituted alkylthio, optionally substituted arylalkylthio, dialkoxy- or diaryloxy- phosphinyl [-P(=O)(OR⁴)₂], dialkyl- or diaryl- phosphinyl [-P(=O)R⁴₂], where R⁴ is selected from the group consisting of optionally substituted C₁-C₁₈ alkyl, optionally substituted C₂-C₁₈ alkenyl, optionally substituted aryl, optionally substituted heterocyclyl, optionally substituted aralkyl, optionally substituted alkaryl, optionally substituted acylamino, optionally substituted acylimino, optionally substituted amino, a polymer chain formed by any mechanism; and wherein Z may be additionally selected from the group consisting of optionally substituted alkyl, preferably optionally substituted C ₁-C₂₀ alkyl, optionally substituted aryl, and optionally substituted arylalkyl. Optional substituents for R⁴ and Z groups include epoxy, hydroxy, alkoxy, acyl, acyloxy, carboxy (and its salts), sulfonic acid (and its salts), alkoxy- or aryloxy- carbonyl, isocyanato, cyano, silyl, halo, and dialkylamino.

Generally Z is selected, without limitation, from the group consisting of: -R⁵ , -OR⁵, -SR⁵, where R⁵ is an optionally substituted C₁-C₂₀ alkyl, -NR⁵R⁶ wherein R⁵ is as defined and R⁶ is selected from optionally substituted C₁ -C₂₀ and alkyl optionally substituted aryl, and 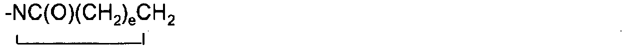 wherein e is an integer from 2 to 4.

Preferably Z is selected from the group consisting of -OR⁵, -SR⁵, where R ⁵ is an optionally substituted C₁-C₂₀ alkyl, -NR⁵R⁶ wherein R⁵ is as defined and R⁶ is selected from optionally substituted C₁-C₂₀ and alkyl optionally substituted aryl, and 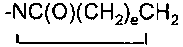 wherein e is an integer from 2 to 4.

More preferably, Z is selected from the group consisting of -SR⁵, where R⁵ is an optionally substituted C₁-C₂₀ alkyl, -NR⁵R⁶ wherein R⁵ is as defined and R⁶ is selected from optionally substituted C₁-C₂₀ and alkyl optionally substituted aryl, and 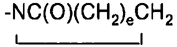 wherein e is an integer from 2 to 4.

Even more preferably, Z is selected, without limitation, from the group consisting of -SCH₂(C₆H₅), -S(CH₂)ᵤCO₂H wherein u is an integer from 2 to 11, -OC_{z}H_{2z+1}, -SC_{z}H_{2z+1}, wherein z is as above defined an integer from 1 to 12, preferably from 2 to 12, such as, without limitation, 2, 3, 4, 6, 8, 10, 12, -SCH₂CH₂OH, -OCH₂CF₃, -N(C₆H₅)(CH₃).

In formula (II) Rₐ may be selected from C₁-C₆ alkyl, C₁-C₆ alkoxy, aryl or heteroaryl, each of which may be substituted with one or more hydrophilic groups selected from -CO₂H, -CO₂R, -CN, -SO₃H -OSO₃H, -SOR, -SO₂ R, -OP(OH)₂, -P(OH)₂, -PO(OH)₂, -OH, -OR, -(OCH₂-CHR⁰)_{w}-OH, -(OCH ₂-CHR⁰)_{w}-OR, -CONH₂, CONHR¹, CONR¹R², -NR¹R², -NR¹R²R³, where R is selected from C₁-C₆ alkyl, R⁰ is selected from hydrogen or R, w is an integer from 1 to 10, R¹, R² and R³ are independently selected from C₁-C₆ alkyl and aryl which are optionally substituted with one or more hydrophilic substituent selected from -CO₂H, -SO₃H, -OSO₃H, -OH, -(OCH₂CHR⁰)_{w} -OH, -CONH₂, -SOR and SO₂R, and salts thereof, wherein R, R⁰ and w are as defined above.

Preferably Rₐ is selected, without limitation, from the group consisting of: -CH(CH₃)CO₂H, -CH(CO₂H)CH₂CO₂H, -C(CH₃)₂CO₂H, -CH₂(C₆H₅), -C(CN)(CH₃)CO₂H, -C(CN)(CH₃)CH₂CH₂CO₂H.

As used herein, the terms "aryl" and "heteroaryl" refer to any substituent which includes or consists of one or more aromatic or heteroaromatic ring respectively, and which is attached via a ring atom. The rings may be mono or polycyclic ring systems, although mono or bicyclic 5 or 6 membered rings are preferred. The term "alkyl", used either alone or in combination, as in "alkenyloxyalkyl", "alkylthio", "alkylamino" and "dialkylamino" denotes straight chain, branched or cyclic alkyl, preferably C₁-C₂₀ alkyl or cycloalkyl. The term "alkoxy" denotes straight chain or branched alkoxy, preferably C₁-C₂₀ alkoxy. Examples of alkoxy include methoxy, ethoxy, n-propoxy, isopropoxy and the different butoxy isomers. The term "alkenyl" denotes groups formed from straight chain, branched or cyclic alkenes including ethylenically mono-, di- or poly-unsaturated alkyl or cycloalkyl groups as previously defined, preferably C₂-C₂₀ alkenyl. The term "acyl" either alone or in combination, as in "acyloxy", "acylthio", "acylamino" or "diacylamino", denotes carbamoyl, aliphatic acyl group and acyl group containing an aromatic ring, which is referred to as aromatic acyl or a heterocyclic ring which is referred to as heterocyclic acyl, preferably C₁-C₂₀ acyl.

In a first aspect of the process each -(H)- in formula (II) is independently a polymerised residue of an ethylenically unsaturated monomer and n is an integer from 2 to 300, preferably from 2 to 250, even from 3 to 200, more preferably from 3 to 150 and even more preferably from 3 to 120.

RAFT agents of formula (II) wherein n is an integer from 5 to 150, preferably from 10 to 120, have been found to be advantageous in the inventive process.

RAFT agents of formula (II) according to this first aspect can be prepared by carrying out the controlled polymerization reaction of at least one ethylenically unsaturated monomer (h) precursor to -(H)- in the presence of a RAFT agent of formula (I) 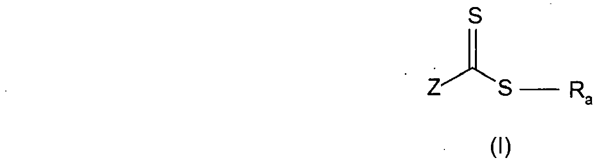 wherein Rₐ and Z are as defined in formula (II), under standard polymerization conditions known in the art.

Any ethylenically unsaturated monomer (h) that can be polymerized via a free radical polymerization process may be used as a precursor to -(H)-.

In a preferred aspect of the invention the -(H)ₙ- group is hydrophilic. Thus, in said preferred aspect the -(H)ₙ- group comprises recurring units deriving from at least one ethylenically unsaturated monomer having hydrophilic character (h1). Optionally recurring units deriving from one or more ethylenically unsaturated monomer having hydrophobic character (h2) can be present in the -(H)ₙ- group provided that the overall hydrophilic character of the -(H)ₙ- group is maintained.

The terms "hydrophilic" and "hydrophobic" are used throughout the present specification with their commonly recognised meaning, that is to refer to compounds and/or functional parts of compounds "provided with a tendency to interact with or dissolve in water" (hydrophilic) or "incapable of dissolving in water" (hydrophobic).

Any ethylenically unsaturated monomer having hydrophilic character (h1), that is any ethylenically unsaturated monomer comprising either cationic, anionic or non-ionic functional groups imparting hydrophilic character, may be used to obtain the -(H)ₙ- group.

Typically ethylenically unsaturated monomers (h1) are selected among those comprising at least one carboxylic, sulfonic, sulfuric, phosphonic, phosphoric acid functional group, its salt or precursor thereof.

Among monomers (h1) comprising at least one carboxylic functional group or precursor thereof mention may be made for instance of α-β-ethylenically unsaturated carboxylic acids and the corresponding anhydrides, such as acrylic acid, acrylic anhydride, methacrylic acid, methacrylic anhydride, maleic acid, maleic anhydride, fumaric acid, itaconic acid, N-methacryloylalanine, N-acryloylglycine, *p-*crcarboxystyrene, and their water-soluble salts. Monomers precursors of carboxylic functional groups may be chosen, such as *tert-*butyl acrylate or *tert-*butyl methacrylate, which produce a carboxylic acid functional group, or its salt, by hydrolysis after polymerization. Among the monomers (h1) comprising at least one carboxylic functional group, acrylic acid or methacrylic acid may be favoured.

Among monomers (h1) comprising at least one sulfuric or sulfonic functional group, or precursors thereof, mention may be made for instance of vinyl sulfonic acid, styrene sulfonic acid, 2-acrylamido-2-methylpropane sulfonic acid, 3-[N-(2-methacryloyloxyethyl)-N,N-dimethylammonio]propane sulfonic acid, 3-[N,N-dimethylvinylbenzylammonio)propane sulfonic acid, 3-[2-(N-methacrylamido)-ethyldimethylammonio]propane sulfonic acid, 3-(methacryloyloxy)propane sulfonic acid, 3-(acryloyloxy)propane sulfonic acid, 2-(methacryloyloxy)ethane sulfonic acid, 2-(acryloyloxy)ethane sulfonic acid, 2-methylenesuccinic acid bis(3-sulfopropyl) ester, 3-[N-(3-methacrylamidopropyl)-N,N-dimethyl]ammoniopropane sulfonic acid, -(2-vinylpyridinio)propane sulfonic acid and their corresponding salts and sulfate analogs. Monomers comprising precursors of sulfonic acid functional groups may be chosen, from example, from *n*-butyl *p* -styrenesulfonate, neopentyl *p*-styrene sulfonate, which produces a sulfonic acid functional group, or its salt, by hydrolysis after polymerization.

Notable examples of monomers (h1) comprising a phosphonic acid or phosphonic acid precursor are for instance:
N-methacrylamidomethylphosphonic acid ester derivatives, in particular the *n*-propyl ester, the methyl ester, the ethyl ester, the *n*-butyl ester or the isopropyl ester, and their phosphonic monoacid and diacid derivatives, such as N-methacrylamidomethylphosphonic diacid;
N-methacrylamidoethylphosphonic acid ester derivatives, such as N-methacrylamidoethylphosphonic acid dimethyl ester or N-methacrylamidoethylphosphonic acid di(2-butyl-3,3-dimethyl)ester, and their phosphonic monoacid and diacid derivatives, such as N-methacrylamidoethylphosphonic diacid; N-acrylamidomethylphosphonic acid ester derivatives, such as N-acrylamidomethylphosphonic acid dimethyl ester, N-acrylamidomethylphosphonic acid diethyl ester or bis(2-chloropropyl)N-acrylamidomethylphosphonate, and their phosphonic monoacid and diacid derivatives, such as N-acrylamidomethylphosphonic acid; vinylbenzylphosphonate dialkyl ester derivatives, in particular the di(n-propyl), di(isopropyl), diethyl, dimethyl, di(2-butyl-3,3'-dimethyl) and di(t-butyl) ester derivatives, and their phosphonic monoacid and diacid alternative forms, such as vinylbenzylphosphonic diacid; diethyl 2-(4-vinylpehnyl)ethanephosphonate; dialkylphosphonoalkyl acrylate and methacrylate derivatives, such as 2-(acryloyloxy)ethylphosphonic acid dimethyl ester and 2-(methyacryloyloxy)ethylphosphonic acid dimethyl ester, 2-(methacryloyloxy)methylphosphonic acid diethyl ester, 2-(methacryloyloxy)methylphosphonic acid dimethyl ester, 2-(methacryloyloxy)propylphosphonic acid dimethyl ester, 2-acryloyloxy)methylphosphonic acid diisopropyl ester or 2-(acryloyloxy)ethylphosphonic acid diethyl ester, and their phosphonic monoacid and diacid alternative forms, such as 2-(methacryloyloxy)ethylphosphonic acid, 2-(methacryloyloxy)methylphosphonic acid, 2-(methacryloyloxy)propylphosphonic acid, 2-(acryloyloxy)propylphosphonic acid and 2-acryloyloxy)ethylphosphonic acid; vinylphosphonic acid, optionally substituted by cyano, phenyl, ester or acetate groups, vinylidenephosphonic acid, in the form of a salt or the form of its isopropyl ester, or bis(2-chloroethyl)vinylphosphonate.

Ethylenically unsaturated monomers (h1) can also be chosen from the phosphate analogs of the phosphonate-comprising monomers described above. Mention may be made, as specific phosphate-comprising monomers, of: 2-(methacryloyloxy)ethyl phosphate, 2-(acryloyloxy)ethyl phosphate, 2-(methacryloyloxy)propyl phosphate, 2-(acryloyloxy)propyl phosphate, and acrylates or methacrylates of polyethylene glycol omega phosphates or acrylates or methacrylates of polypropylene glycol omega phosphates.

Among non-ionic ethylenically unsaturated monomers having hydrophilic character (h1) mention may be made of 2-hydroxyethyl acrylate, 2-hydroxyethyl methacrylate, poly(ethylene oxide) methyl ether methacrylate (PEOMA), poly(ethylene oxide) methyl ether acrylate (PEOA), N,N-dimethylacrylamide, N-vinyl-2-pyrrolidone.

Among ethylenically unsaturated monomers having hydrophilic character (h1) comprising cationic functional groups mention may be made of dimethylaminoethylmethacrylate and its quaternary ammonium salts, vinylbenzylchloride and its quaternary ammonium salts.

Preferred ethylenically unsaturated monomers having hydrophilic character (h1) are selected among those having an anionic functional group or a precursor thereof.

Advantageously, the ethylenically unsaturated monomer having hydrophilic character (h1) is selected without limitation, from the group consisting of acrylic or methacrylic acids, vinyl phosphonic acid, vinyl sulfonic acid, styrene sulfonic acid, and 2-acrylamido-2-methylpropane sulfonic acid, their salts or their precursors. Particularly preferred ethylenically unsaturated monomers having hydrophilic character (h1) are selected among acrylic acid and methacrylic acid.

Typically, preferred ethylenically unsaturated monomers having hydrophilic character (h1) are characterized in that they contain functional groups whose corresponding acid has an acid dissociation constant pKa of less than 6, preferably of less than 5, even more preferably of less than 4.

Ethylenically unsaturated monomers having a hydrophobic character (h2) that may be copolymerised with ethylenically unsaturated monomers having a hydrophilic character (h1) are for instance those selected from the group consisting of: styrene and styrene derivatives, such α-methylstyrene, *p*-methylstyrene or *p*-(*t-*butyl)styrene; esters of acrylic or methacrylic acid, such as methyl acrylate, ethyl acrylate, propyl acrylate, n -butyl acrylate, isobutyl acrylate, 2-ethylhexyl acrylate, *t*-butyl acrylate, methyl methacrylate, ethyl methacrylate, *n*-butyl methacrylate, isobutyl methacrylate; C₃-C₁₂ vinyl nitriles, e.g. acrylonitrile or methacrylonitrile; vinyl esters of carboxylic acids, such as vinyl or allyl acetates, propionates, stearates; vinyl halides, vinylidene halides, or vinylaromatic halides, e.g. vinyl chloride, vinylidene chloride or pentafluorostyrene; α-olefins, such as ethylene; conjugated diene monomers, for examples butadiene, isoprene, chloroprene; and monomers capable of generating polydimethylsiloxane chains (PDMS).

Specific examples of RAFT agents of formula (II) which have been found useful in the inventive process are for instance: a poly(acrylic acid)p-RAFT agent wherein 5 ≤ p ≤ 5 150, preferably 10 ≤ p ≤ 5 120 and a poly(methacrylic acid)q-RAFT agent wherein 5 ≤ q ≤ 130, preferably 5 ≤ q ≤ 100.

In a second aspect of the process of the invention the -(H)ₙ- group in formula (II) is an optionally substituted polyalkylene oxide chain. Notably, each -(H)- in formula (II) is an ethylene oxide and/or propylene oxide residue -(CHR⁷CH₂O)-, wherein R⁷ is hydrogen or -CH₃, and n is an integer from 2 to 200, preferably from 2 to 180, more preferably from 10 and 160, and even more preferably from 20 to 140. Preferably each -(H)-in formula (II) is an ethylene oxide residue. More preferably, each -(H)- in formula (II) is an ethylene oxide residue and Rₐ is selected from -(OCH₂ -CHR⁰)_{w}-OH and -(OCH₂-CHR⁰)_{w}-OR, wherein R, R⁰ and w are as defined above.

Specific examples of RAFT agents of formula (II) according to this second embodiment and which have been found useful in the inventive process are for instance poly(CH₂CH₂O)ᵣ-RAFT agents wherein 5 ≤ r ≤ 200, preferably 10 ≤ r ≤ 140.

In a particularly preferred aspect of this embodiment each -(H)- in formula (II) is an ethylene oxide residue, Rₐ is selected from -(OCH₂-CHR⁰)_{w}-OH and -(OCH₂-CHR⁰)_{w}-OR, and the -(H)ₙ- group is linked to the sulphur atom in formula (II) via an ester linkage, preferably a -S-C(CH₃)₂C(O)-group.

RAFT initiators according to this second embodiment have been disclosed in WO 2009/147338 (UNIVERSITE PIERRE ET MARIE CURIE PARIS VI) 10.12.2009.

In an aspect of the invention group Z in the RAFT agent of formula (I) or (II) may be a polymer chain formed by any mechanism. Such a polymer chain may be the same or different from the -(H)ₙ- group in the RAFT agent of formula (II).

When the RAFT agents of formula (II) are used for the polymerization of vinylidene chloride, RAFT agents comprising at least one block -(H)ₙ- and at least one block comprising recurring units deriving from vinylidene chloride can be obtained.

Analogously, when the RAFT agents of formula (II) are used for the polymerization of vinylidene chloride in the inventive process, block copolymers comprising at least one block -(H)ₙ- and at least one block comprising recurring units deriving from vinylidene chloride can be obtained which do not contain the -SC(S)Z functional group.

The RAFT agent may allow to control and tailor the respective lengths of the block(s) -(H)ₙ- and of the vinylidene chloride block(s) in the vinylidene chloride polymer.

Additionally, the living nature of the polymerization carried out under the control of the RAFT agent allows preparing vinylidene chloride polymers and/or RAFT agents having more than one block of each type, -(H)ₙ- or vinylidene chloride. Additionally each block of any type may have a different composition and/or block length from any other block of the same type.

Preferably, the -(H)ₙ- block(s) is hydrophilic.

. The polymerization process is typically carried out in a liquid medium.

The vinylidene chloride monomer and the optional monomer(s) copolymerizable with vinylidene chloride may be present in the liquid medium as a separate liquid phase, they may be fully soluble in the liquid medium, or the liquid medium may itself consist essentially of the monomer(s).

The process may in fact be carried out in a liquid medium essentially comprising vinylidene chloride and any optional ethylenically unsaturated monomer copolymerizable with vinylidene chloride.

Alternatively, the process may be carried out in the presence of a liquid medium different from vinylidene chloride and the optional ethylenically unsaturated monomer.

The liquid medium may be an organic solvent. Typically, the organic solvent is selected among those solvents in which vinylidene chloride (and optionally any monomer copolymerizable therewith) is soluble. Notable, non-limiting, examples of suitable organic solvents are benzene, toluene, ethyl acetate, dioxane, tetrahydrofuran.

Alternatively, the liquid medium may be water.

In a preferred embodiment of the process of the invention, the liquid medium is water and the process produces an aqueous dispersion of the vinylidene chloride polymer.

Advantageously, the inventive process comprises polymerising vinylidene chloride and optionally at least one ethylenically unsaturated monomer copolymerizable therewith under the control of a RAFT agent of formula (II) in water.

When the liquid phase is water the process may be an emulsion radical polymerization process, that is a radical polymerization process which is carried out in an aqueous medium optionally in the presence of emulsifying agents and radical initiators which are at least partly soluble in water.

Alternatively, the process may be a suspension polymerization process, that is a radical polymerization process in which oil-soluble initiators are employed and an emulsion of droplets of monomers is produced by virtue of powerful mechanical stirring and the presence of emulsifying or suspension agents.

Preferably, the inventive process is an emulsion radical polymerization process carried out in an aqueous liquid medium.

More preferably, the inventive process is an emulsion radical polymerization process carried out in an aqueous liquid medium and wherein the RAFT agent is selected from the RAFT agents of formula (II) comprising at least one hydrophilic -(H)ₙ- block.

Non limiting examples of RAFT agents of formula (II) which have been found useful in an emulsion radical polymerization process carried out in an aqueous liquid medium are for instance: a poly(acrylic acid)p-RAFT agent wherein 5 ≤ p ≤ 150, preferably 10 ≤ p ≤ 140, more preferably 40 ≤ p ≤ 120 and a poly(methacrylic acid)q-RAFT agent wherein 5 ≤ q ≤ 130, preferably 5 ≤ q ≤ 100, more preferably 20 ≤ q ≤ 100.

Still more preferably, the inventive process is an emulsion radical polymerization process carried out in an aqueous liquid medium and wherein the RAFT agent is selected from the RAFT agents of formula (II) comprising at least one hydrophilic -(H)ₙ- block and at least one block comprising recurring units deriving from vinylidene chloride.

The polymerisation of vinylidene chloride will usually require initiation from a source of free radicals. The source of initiating radicals can be provided by any suitable method of generating free radicals, such as the thermally induced homolytic scission of suitable compound(s) (thermal initiators such as peroxides, peroxyesters, or azo compounds), redox initiating systems, photochemical initiating systems or high energy radiation such as electron beam, X- or gamma-radiation. The initiating system is chosen such that under the reaction conditions there is no substantial adverse interaction of the initiator or the initiating radicals with the RAFT agent under the conditions of the reaction.

Other conventional additives may be added to the liquid phase during the polymerization process, such as dispersants, surfactants, pH regulators as conventionally known in the art.

Typically the process is carried out at a temperature of at least 15°C, preferably at least 20°C, more preferably at least 30°C. Typically, the temperature is advantageously at most 100°C, preferably at most 90°C, more preferably at most 80°C. The temperature is advantageously between 15°C and 100°C, preferably between 30°C and 80°C.

The pH of the polymerization is between 1 and 7, such as any value within this range, such as about 1, such as about 2, about 3, about 4, about 5, about 6, about 7. The pH is advantageously equal to or below 7, more advantageously equal to or below 6.5.

The pH can be adjusted by any known means. Advantageously, the pH is adjusted by addition of at least one base. Not limiting examples of suitable bases are trisodium pyrophosphate, tetrasodium pyrophosphate and calcium carbonate. Preferably, the base is tetrasodium pyrophosphate.

The process of the invention may be operated in batch, semi-continuous or continuous modes. When the liquid medium consists essentially of vinylidene chloride and optional ethylenically unsaturated monomer(s), the process is preferably operated in batch mode. When, on the other hand, the liquid medium does not consist essentially of vinylidene chloride and optional ethylenically unsaturated monomer(s) the process may be operated in batch, semi-continuous or continuous modes.

At the end of the process the vinylidene chloride polymer may be treated according to known procedures to remove chain-end groups deriving from the RAFT agent.

At the end of the process the vinylidene chloride polymer may be either isolated as a solid from the liquid medium or, for instance, when the liquid medium is water, used as an aqueous dispersion. In this latter case residual monomers are stripped before the dispersion subsequent use.

Conventional techniques can be used for the isolation of the vinylidene chloride polymer from the liquid medium or for the formulation of the vinylidene chloride polymer dispersion.

In accordance with the process of the invention, vinylidene chloride and the optional ethylenically unsaturated monomer(s) copolymerizable therewith are polymerised under the control of the RAFT agent of formula (II) to form a vinylidene chloride polymer.

The expression "vinylidene chloride polymer" is used herein to indicate a polymer comprising at least 50 wt% of recurring units deriving from vinylidene chloride. Typically, the amount of vinylidene chloride in the vinylidene chloride polymer varies from 50 to 99.5 wt%, preferably from 60 to 98 wt% and more preferably from 65 to 95 wt%.

Non-limiting examples of suitable ethylenically unsaturated monomers copolymerizable with vinylidene chloride that can be used in the process of the present invention, are for instance vinyl chloride, vinyl esters such as for example vinyl acetate, vinyl ethers, acrylic acids, their esters and amides, methacrylic acids, their esters and amides, acrylonitrile, methacrylonitrile, styrene, styrene derivatives, such as styrene sulfonic acid and its salts, vinyl phosphonic acid and its salts, butadiene, olefins such as for example ethylene and propylene, itaconic acid, maleic anhydride, but also copolymerizable emulsifiers such as 2-acrylamido-2-methylpropanesulphonic acid (AMPS) or one of its salts, e.g. the sodium salt, 2-sulphoethylmethacrylic acid (2-SEM) or one of its salts, e.g. the sodium salt, and the phosphate ester of methacrylate-terminated polypropylene glycol (such as the product SIPOMER^{®} PAM-200 from Rhodia) or one of its salts, e.g. the sodium salt, poly(ethylene oxide) methyl ether acrylate (PEOA), poly(ethylene oxide) methyl ether methacrylate (PEOMA).

Preferably, the ethylenically unsaturated monomer copolymerizable with vinylidene chloride used in the process of the invention is selected from the group consisting of vinyl chloride, maleic anhydride, itaconic acid, styrene, styrene derivatives, and the acrylic or methacrylic monomers corresponding to general formula (III):

CH₂ = CR₁R₂ (III)

in which R₁ is chosen from hydrogen and -CH₃ and R₂ is chosen from -CN and -COR₃, wherein R₃ is chosen from -OH, -OR₄, wherein R₄ is a C₁-C₁₈ linear or branched alkyl group optionally bearing one or more -OH groups, a C₂-C₁₀ epoxyalkyl group and a C₂-C₁₀ alkoxyalkyl group and wherein R₃ is also chosen from the -NR₅R₆ radicals in which R₅ and R₆, which are the same or different, are chosen from hydrogen and C₁-C₁₀ alkyl groups, optionally bearing one or more -OH groups, the aforementioned copolymerizable surfactants and the phosphate ester of methacrylate-terminated polypropylene glycol or one of its salts, poly(ethylene oxide) methyl ether acrylate (PEOA), poly(ethylene oxide) methyl ether methacrylate (PEOMA).

More preferably, the ethylenically unsaturated monomer copolymerizable with vinylidene chloride used in the process of the invention is selected from the group consisting of vinyl chloride, maleic anhydride, itaconic acid, the acrylic or methacrylic monomers selected from the group consisting of methyl acrylate, methyl methacrylate, ethyl acrylate, ethyl methacrylate, n-butyl acrylate, n-butyl methacrylate, 2-ethylhexyl acrylate, 2-ethylhexyl methacrylate, 2-hydroxyethyl acrylate, 2-hydroxyethyl methacrylate, glycidyl methacrylate, glycidyl acrylate, acrylonitrile, methacrylonitrile, acrylic acid, methacrylic acid, acrylamide, N-methylolacrylamide, N,N-di(alkyl)acrylamide, 2-acrylamido-2-methylpropanesulphonic acid (AMPS) or one of its salts, 2-sulphoethylmethacrylic acid (2-SEM) or one of its salts, and the phosphate ester of methacrylate-terminated polypropylene glycol or one of its salts, poly(ethylene oxide) methyl ether acrylate (PEOA), poly(ethylene oxide) methyl ether methacrylate (PEOMA).

Even more preferably, the at least one ethylenically unsaturated monomer copolymerizable with vinylidene chloride is selected from the group consisting of maleic anhydride, itaconic acid, the acrylic or methacrylic monomers selected from the group consisting of methyl acrylate, methyl methacrylate, ethyl acrylate, ethyl methacrylate, n-butyl acrylate, n-butyl methacrylate, 2-ethylhexyl acrylate, 2-ethylhexyl methacrylate, 2-hydroxyethyl acrylate, 2-hydroxyethyl methacrylate, glycidyl methacrylate, glycidyl acrylate, acrylonitrile, methacrylonitrile, acrylic acid, methacrylic acid, acrylamide, N-methylolacrylamide, N,N-di(alkyl)acrylamide, 2-acrylamido-2-methylpropanesulphonic acid (AMPS) or one of its salts, 2-sulphoethylmethacrylic acid (2-SEM) or one of its salts, and the phosphate ester of methacrylate-terminated polypropylene glycol or one of its salts, poly(ethylene oxide) methyl ether acrylate (PEOA), poly(ethylene oxide) methyl ether methacrylate (PEOMA).

Most preferably, the at least one ethylenically unsaturated monomer copolymerizable with vinylidene chloride is selected from the group consisting of methyl acrylate, methyl methacrylate, ethyl acrylate, ethyl methacrylate, n-butyl acrylate, n-butyl methacrylate, 2-ethylhexyl acrylate, 2-ethylhexyl methacrylate, 2-hydroxyethyl acrylate, 2-hydroxyethyl methacrylate, glycidyl methacrylate, glycidyl acrylate, acrylonitrile, methacrylonitrile, acrylic acid, methacrylic acid, acrylamide, N-methylolacrylamide, N,N-di(alkyl)acrylamide, poly(ethylene oxide) methyl ether acrylate (PEOA), poly(ethylene oxide) methyl ether methacrylate (PEOMA).

A second object of the present invention is a block copolymer comprising at least one hydrophilic block -(H)ₙ- and at least one block -(V)ₘ-, wherein -(H)- and n are as defined above and each -(V)- is a polymerised residue of vinylidene chloride and optionally of at least one ethylenically unsaturated monomer copolymerizable with vinylidene chloride; and wherein m is an integer from 1 to 3000, preferably from 2 to 2500, more preferably from 5 to 2000.

The definition of the vinylidene chloride block copolymer includes RAFT agents comprising at least one hydrophilic block -(H)ₙ- and at least one block comprising recurring units deriving from vinylidene chloride, a block -(V)ₘ-, as defined above.

Each -(V)ₘ- block comprises at least 50 wt% of recurring units deriving from vinylidene chloride. Typically, the amount of recurring units deriving from vinylidene chloride in the -(V)ₘ- block is at least 60 wt% and more preferably at least 65 wt%. In addition to recurring units deriving from vinylidene chloride, the -(V)ₘ- block may optionally comprise recurring units deriving from at least one ethylenically unsaturated monomer copolymerizable with vinylidene chloride as defined above for the vinylidene chloride polymer.

The block copolymer may comprise more than one hydrophilic block -(H)ₙ-and/or more than one block -(V)ₘ-.

Additionally, the block copolymer may comprise blocks -(X)p- other than hydrophilic blocks -(H)ₙ- and vinylidene chloride blocks -(V)ₘ-.

Each block of any type, -(H)ₙ-, -(V)ₘ- and -(X)ₚ-, may have a different composition and/or block length from any other block of the same type.

The definitions and preferences defined previously within the context of the vinylidene chloride polymer and the RAFT agent of formula (II) apply to the vinylidene block copolymer as defined above.

A further object of the present invention is a composition comprising the vinylidene chloride block polymer as defined above.

In one aspect the composition may be a solid composition, typically comprising the vinylidene chloride block polymer as defined above and at least one polymer different from the vinylidene chloride block copolymer. Typically, the polymer used in the composition will be, without limitation, selected among those polymers which are compatible with vinylidene chloride polymers. The polymer in the composition could be a vinylidene chloride polymer different from the vinylidene chloride polymer of the invention.

In another aspect the composition may be a liquid composition comprising the vinylidene chloride block polymer and a liquid phase.

The liquid phase may be the same or different from the liquid medium used in the process for preparing the vinylidene chloride polymer. In a particularly advantageous aspect of the process of the invention, when the liquid phase does not consist essentially of vinylidene chloride and of the optional ethylenically unsaturated monomer(s) copolymerizable therewith, the process may be conveniently used to directly prepare a dispersion of the vinylidene chloride polymer in a liquid which is ready for use. Alternatively, the liquid composition may be prepared by dispersing or suspending the vinylidene chloride polymer in a suitable liquid.

The process of the invention makes it possible to obtain vinylidene chloride block polymers having improved properties.

The vinylidene chloride block polymers can be particularly useful in the coatings, i.e. paints and varnishes, field.

The vinylidene chloride block polymers may also be useful as an additive in various compositions, in particular as a pigment dispersant, as a stabilizer for oil/water or water/oil emulsions, or as a stabilizer in polymer blends.

In a particularly advantageous application the vinylidene chloride block polymer of the invention comprising at least one hydrophilic block and at least one vinylidene chloride block can be used as a stabilizer and optionally as a RAFT agent for aqueous emulsions comprising vinylidene chloride to be used in the preparation of vinylidene chloride polymers.

Thus an object of the present invention is the use of vinylidene chloride block copolymers comprising at least one hydrophilic block -(H)ₙ- and at least one block vinylidene chloride block -(V)ₘ- in an emulsion polymerization process of vinylidene chloride and optionally at least one ethylenically unsaturated monomer copolymerizable with vinylidene chloride. The vinylidene block copolymer may function as a stabilizer so that no further emulsifying agents might be needed.

Another object of the invention is the use of the inventive vinylidene chloride block polymer for the preparation of films, as well as the films comprising a vinylidene chloride block polymer as above defined.

In one embodiment the films may be prepared by extrusion of a solid polymer composition comprising the vinylidene chloride block polymer. Alternatively, the films may be prepared by conventional coating techniques either from a molten composition comprising the vinylidene chloride block polymer or from a dispersion (either in water or in an appropriate solvent) of the vinylidene chloride block polymer.

The invention will be now described in more detail with reference to the following examples.

### EXAMPLES

### MATERIALS

The following materials were used in the examples:
V70: 2,2'-Azobis(4-methoxy-2,4-dimethyl valeronitrile)
ACPA: 4,4'-azobis-4-cyanopentanoic acid (purity>98%, Sigma-Aldrich) AIBN: Azobisisobutyronitrile (purity>98%, Fluka)
TTCA: 2-(dodecylthiocarbonothioylthio)-2-methylpropanoic acid, prepared as described in LAI, J.T., et al... Macromolecules. 2002, vol.35, p.6754-6756.
CBP: 4-cyano-4-(butylsulfanylcarbonyl) sulfanylpentanoic acid prepared as described in BOUHADIR, N, et al... Tetrahedron Letters. 1999, vol.40, p.277. and THANG, S.H., et al... Tetrahedron Letters. 1999, vol.40, p.2435.
GC1: 2-(butylsulfanyl-carbonothioyl) sulfanylpropanoic acid prepared as described in PAEK, K., et al. ,. Chemical Communications.. 2011, vol.37, p.10272.
AA: Acrylic acid (purity>99%, Aldrich)
MA: Methyl acrylate (purity>99%, Aldrich) distilled under vacuum VDC: Vinylidene chloride (purity 99,5%(GC), Fluka) washed with a 25 wt% NaOH aqueous solution
Dioxane (GPR Rectapur, VWR)
Toluene (GPR Rectapur, VWR)
Tetrahydrofurane (THF) (Normapur, VWR)
Methanol (GPR Rectapur, VWR)
Diethylether (Acros Organics)

### CHARACTERIZATION

Monomer conversion: determined by gravimetric analysis.

Molecular weight and molecular weight distribution (M_{w}/Mₙ) of the polymers were determined by size exclusion chromatography (SEC). The latter was carried out at 40°C using two columns PL Gel Mixed C columns (5µm). THF was used as eluent with a flow rate of 1mLxmin⁻¹. The detection was performed with an LCD Analytical refracto-Monitor IV differential refractive index detector. The average molecular weights were calculated from a calibration curve based on polystyrene standards.

Average particle diameter (D_{z}) and polydispersity of the diluted aqueous polymer dispersion were measured by dynamic light scattering (DLS) at 25°C, using the Zetasizer Nano S90 instrument from Malvern (90° angle, 5 mW He-Ne laser at 633 nm).

### Examples 1-2: Preparation of a poly(VDC-co-MA) copolymer in solution

0.1428 g (0.392 mmol) of TTCA was dissolved in 8.49 g of toluene in a 25 mL round-bottom flask. Then 0.0178 g (0.057 mmol) of V70 was added and the resulting mixture was purged with nitrogen for 20 minutes at 0°C. 7.1567 g (73.8 mmol) of VDC and 0.7648 g (8.88 mmol) of MA were injected through the septum into the reaction mixture. The sealed round bottom-flask was immersed in a thermostatted oil bath at 30°C.

In the reaction medium, MA was 11 mol% relative to the total molar quantity of the monomers.

Example 2 was carried out following the procedure of Example 1, replacing TTCA with CBP and toluene with dioxane.

The operating conditions are summarized in Table 1.

Samples were taken at regular interval in order to monitor, by gravimetric analysis, the degree of conversion of the overall monomers and also the evolution of the experimental number average molecular weight *M*ₙ, ₑₓₚ of the polymer calculated by SEC.

After 44h the monomer conversion in Example 1 was 36.0 wt%. In Example 2 monomer conversion was 36.9 wt% after 54h of reaction.

The polymers were recovered after precipitation in cold methanol.

**Table 1**

| | Example 1 | Example 2 |
|---|---|---|
| RAFT agent | TTCA | CBP |
| [VDC]₀ (mol.L⁻¹). | 4.47 | 5.15 |
| [MA]₀ (mol.L⁻¹) | 0.54 | 0.64 |
| wt% monomers | 47.8 | 49.8 |
| mol% MA | 10.7 | 11.0 |
| [V70]₀ (mmol.L⁻¹) | 3.5 | 4.4 |
| [RAFT-agent]₀ (mmol.L⁻¹) | 23.7 | 24.9 |
| n_{monomers,0}/n_{RAFT-agent,0} | 211 | 232 |
| n_{V70,0}/n_{RAFT-agent,0} | 0.15 | 0.18 |
| conversion (wt%) | 36.0 | 36.9 |
| *M*_{n, exp} (g.mol⁻¹) | 5500 | 6700 |
| *M*_{w}/*M*ₙ | 1.67 | 1.41 |

### Example 3: poly(VDC-co-MA) in solution under pressure at 66°C

0.95 g (25.9 mmol) of TTCA and 0.0641g (3.89 mmol) of AIBN were dissolved in 50.37 g of toluene. This mixture was introduced in the reactor and purged with argon for 20 minutes at room temperature. 37 mL (0.46 mol) of VDC and 5.20 mL (0.06 mol) of MA were introduced via the injection valve into the reactor after purging with nitrogen for 20 minutes at 0°C.

After this injection, the autoclave was pressurized at 5 bars of argon and the reaction mixture heated at 66°C and stirred at 300 rpm.

Samples were taken at regular interval to monitor, by gravimetric analysis, the degree of conversion of the monomers and the evolution of *M*ₙ, ₑₓₚ of the polymer.

After 48h monomer conversion was to 57.5 wt%. The polymer was recovered after precipitation in cold methanol. *M*_{w}/*M*ₙ = 1.65, *M*_{n, exp} = 7500 g.mol⁻¹.

### Examples 4 - 5: Preparation of a poly(VDC-co-MA) copolymer in bulk

0.160 g (0.44 mmol) of TTCA and 0.020 g (0.06 mmol) of V70 were dissolved in a mixture with 7.1567 g of VDC and 0.8030 g of MA in a sealed flask. Monomers were purged with nitrogen for 20 minutes at 0°C before been injected in the sealed flask. The sealed flask was immersed in a thermostatted oil bath at 30°C.

In Examples 4 and 5 MA was 11% and 22% relative to the total molar quantity of the monomers, respectively.

Each polymer was recovered after precipitation in cold methanol. The polymerization conditions and polymer properties are reported in Table 2.

**Table 2**

| | Example 4 | Example 5 |
|---|---|---|
| [VDC]₀ (mol.L⁻¹) | 10.95 | 9.53 |
| [MA]₀ (mol.L⁻¹) | 1.38 | 2.64 |
| mol% MA | 11.2 | 21.7 |
| [V70]₀ (mmol.L⁻¹ ) | 9.72 | 8.39 |
| [TTCA]₀ (mol.L⁻¹ ) | 0.65 | 0.61 |
| n_{monomers,0}/n_{TT} CA,0 | 190 | 199 |
| n_{V70,0}/n_{TTCA,0} | 0.15 | 0.14 |
| conversion (wt%) | 36.7 | 50.9 |
| *M*_{n, exp} (g.mol⁻¹) | 5300 | 7000 |
| *M*_{w}/*M*ₙ | 1.71 | 1.60 |

### Example 6: Preparation of block copolymer PEO-b-poly(VDC-co-MA): solution polymerization of VDC/MA in the presence of PEO-TTC

1.1559 g (17.3 mmol) of CH₃O-(CH₂CH₂O)₁₄₃-C(O)-C(CH₃)₂-S-C(S)-SC ₁₂H₂₅ (PEO1-TTC) having (*M*_{n, exp} = 8600 g.mol⁻¹), prepared according to the procedure disclosed in WO 2009/147338 (UNIVERSITE PIERRE ET MARIE CURIE PARIS VI) 10.12.2009 was dissolved in 4.02 g of toluene in a 25 mL round-bottom flask. 0.0082 g (0.0266 mmol) of V70 were added and the resulting mixture was purged with nitrogen for 20 minutes at 0°C. 3.1538 g (32.5 mmol) of VDC and 0.3537 g (4.11 mmol) of MA were injected through the septum into the reaction mixture after purging with nitrogen for 20 minutes at 0°C. The sealed round bottom-flask was immersed in a thermostatted oil bath at 30°C.

Samples were taken at regular interval in order to monitor, by gravimetric analysis, the degree of conversion of the monomers and the evolution of *M* n, exp of the polymer.

After 44h monomer conversion was 50 wt%. The polymer was recovered after precipitation in cold methanol. Polymer features of the crude samples taken during the polymerization process are reported in Table 3.

**Table 3**

| Time (minutes) | Conversion (wt%) | *M*_{n, exp} (g.mol⁻¹) | *M*_{w}/*M*ₙ |
|---|---|---|---|
| 180 | 7.6% | 8600 | 1.17 |
| 1080 | 23.9% | 9600 | 1.31 |
| 2640 | 50.3% | 10700 | 1.36 |

### Examples 7 - 9: Preparation of block copolymer PEO-b-poly(VDC-co-MA): emulsion polymerization of VDC/MA in the presence of PEO-TTC under pressure at 70°C

0.5600 g (0.07 mmol) of CH₃O-(CH₂CH₂O)₁₄₃-C(O)-C(CH₃)₂-S-C(S)-SC ₁₂H₂₅ (PEO1-TTC) (*M*_{n, exp} = 8600 g.mol⁻¹), 0.1921 g (0.72 mmol) of TSPP and 0.0221 g (0.12 mmol) of Na₂S₂O₅ were dissolved in 80 g of water. This mixture was introduced in the reactor and purged with argon for 20 minutes at 16°C. Then 6.4 mL (0.08 mol) of VDC, 1.8 mL (0.02 mol) of MA and 5 mL of an aqueous solution of APS ([APS] = 0.28 mol.L_{aq}⁻¹) were introduced via the injection valve into the reactor after purging with nitrogen for 20 minutes at 0°C.

After injection, the autoclave was pressurized at 1 bar with argon and the reaction mixture heated to 70°C and stirred at 400 rpm.

Samples were taken at regular time intervals via the sample liquid valve in order to monitor, by gravimetric analysis, the degree of conversion of the overall monomers and also the evolution of the *M*_{n, exp} of the polymer calculated from SEC analysis.

After 5.3h the overall monomer conversion was 90.5 wt% in Example 7.

Examples 8 and 9 were carried out following the same procedure as Example 7 replacing PEO1-TTC with PEO2-TTC (*M*_{n, exp} = 3200 g.mol⁻¹ ; n=44).

The operating conditions as well as the characteristics of the resulting polymers are summarized in Table 4.

**Table 4**

| | | **Example 7** | **Example 8** | **Example 9** |
|---|---|---|---|---|
| RAFT agent | | PEO1-TTC | PEO2-TTC | PEO2-TTC |
| wt% monomers | | 9.9 | 9.9 | 24.9 |
| mol% MA | | 20.0 | 20.0 | 20.0 |
| [TSPP] (mmol.L_{aq}⁻¹) | | 8.5 | 9.0 | 9.1 |
| [APS]₀ (mmol.L_{aq}⁻¹) | | 1.6 | 3.5 | 2.0 |
| n_{APS,0}/n_{Na2S2O5,0} | | 1.2 | 1.2 | 1.2 |
| [RAFT-agent]₀ (mmol. L_{aq} ⁻¹) | | 0.8 | 2.1 | 6.4 |
| n_{monomers,0}/n_{RAFT-agent,0} | | 1537 | 569 | 564 |
| n_{iniator,0}/n_{RAFT-agent,0} | | 2.1 | 1.7 | 0.3 |
| m_{RAFT-agent,0}/m_{monomers,0} | | 5.9% | 5.9% | 6.0% |
| conversion (wt%) | | 90.5 | ≈ 100 | 34 |
| *M*_{n, exp} (kg.mol⁻¹) | | 15.4 | 12.5 | - |
| *M*_{w}/*M*ₙ | | 3.0 | 2.2 | - |
| *DLS analysis on polymer dispersion* | D_{Z} (nm) | 152 | 519 | - |
| | polydispersity | 0.13 | 0.21 | - |
| Coagulum (wt%) | | 12.0% | 1.0% | - |

Stable latexes were obtained with PEO-TTC of different molar mass. However PEO2-TTC appears to be more efficient than PEO1-TT in stabilizing the growing VDC/MA polymer chain because the amount of coagulum is higher with the latter. The coagulum is the insoluble solid which is formed during the polymerization. The percentage of coagulum represents the ratio of the weight of coagulum by the sum of the weight of the RAFT agent and the monomers initially introduced in the reactor.

In Example 9, the viscosity of the mixture increased and the reaction is stopped at 8h and 34 wt% of conversion.

### Example 10: Preparation of block copolymer PAA-b-poly(VDC-co-MA): solution polymerization of VDC/MA in the presence of PAA-TTC

0.7777 g (0.29 mmol) of HO₂C-C(CH₃)₂-(CH₂-CH(CO₂H))ₙ-S-C(S)-SC₁₂H ₂₅ (PAA1-TTC) (*M*_{n, exp} = 2400 g.mol⁻¹; n= 29) prepared from TTCA in dioxane solution and recovered in diethylether was dissolved in 3.2192 g of dioxane in a 10 mL round-bottom flask. 0.0153 g (0.05 mmol) of V70 was added and the resulting mixture was purged with nitrogen for 20 minutes at 10°C. 0.9122 g (9.41 mmol) of VDC and 0.4518 g (5.25 mmol) of MA were injected through the septum into the reaction mixture after purging with nitrogen for 20 minutes at 0°C. The sealed round bottom-flask was immersed in a thermostatted oil bath at 30°C.

Samples were taken at regular interval in order to monitor, by gravimetric analysis, the degree of conversion of the monomers and the evolution of *M* _{n, exp} of the polymer.

After 16.4h monomer conversion was 84 wt%. The polymer was recovered after precipitation in cold diethylether. *W*_{w}/*M*ₙ = 1.27, *M*_{n, exp} = 5300 g.mol ⁻¹

### Example 11: Preparation of block copolymer PAA-b-poly(VDC-co-AA) in one pot

0.0896 g (0.246 mmol) of TTCA was dissolved in 16.96 g of dioxane in a 25 mL round-bottom flask. 0.0077 g (0.025 mmol) of V70 was added to the reaction mixture sparged with nitrogen for 20 minutes at 15°C. 3.0781 g (42.29 mmol) of AA was injected through the septum into the reaction mixture after purging with nitrogen for 20 minutes. The sealed round bottom-flask was immersed in a thermostatted oil bath at 30°C.

Samples were taken at regular interval in order to monitor, by gravimetric analysis, the degree of conversion of the monomers and the evolution of the *M*_{n, exp} of the polymer.

After 2.8h AA conversion was to 66 wt% and the RAFT agent PAA2-TTC was obtained in-situ (*M*_{w}/*M*ₙ = 1.16, *M*_{n, exp} = 7300 g.mol⁻¹, n=114). Then 2.9112 g (30.03 mmol) of nitrogen purged VDC was injected through the septum.

After 26.8h the overall monomer conversion (AA and VDC) was 30.5 wt%. The polymer was recovered after precipitation in diethylether. M_{w}/*M*ₙ = 1.27, *M*_{n, exp} = 13800 g.mol⁻¹.

### Example 12: Preparation of block copolymer poly(VDC-co-MA)-b-poly(AA) in solution

1.0034 g (6.436 mmol) of poly(VDC-*co*-MA)-TTC (*M*ₙ = 4600 g.mol⁻¹) obtained in Example 1 was dissolved in 30.07 g of dioxane in a 100 mL round-bottom flask. Next, 0.0102 g (0.036 mmol) of ACPA and 5.0530 g (2.069 mol) of AA were added to the reaction mixture. The resulting mixture was purged with nitrogen for 20 minutes at 15°C and then sealed round bottom-flask was immersed in a thermostatted oil bath at 70°C.

Samples were taken at regular interval in order to monitor, by gravimetric analysis, the degree of conversion of the monomers and the evolution of *M* _{n, exp} of the polymer.

After 85 minutes monomer conversion was 60.5 wt%. The polymer was recovered after precipitation in cold diethylether. *M*_{w}/*M*ₙ = 1.45, *M*_{n, exp} = 14800 g.mol⁻¹.

### Examples 13-16: Preparation of block copolymer PAA-b-poly(VDC-co -MA): emulsion polymerization of VDC/MA at 25% solids in the presence of PAA-TTC under pressure at 70°C

0.6504 g (0.12 mmol) of HO₂C-C(CH₃)₂-(CH₂-CH(CO₂H))ₙ-S-C(S)-SC₁₂H ₂₅(PAA3-TTC) (*M*_{n, exp} = 5000 g.mol⁻¹; n=65), 0.6983 g (2.63 mmol) of TSPP and 0.0916 g (0.3 mmol) of ACPA were dissolved in 85 g of water. This mixture was introduced in the reactor and purged with argon for 20 minutes at 16°C. Then 19.5 mL (0.24 mol) of VDC and 5.5 mL (0.06 mol) of MA were introduced via the injection valve into the reactor after purging with nitrogen for 20 minutes at 0°C. After injection, the autoclave was pressurized at 1 bar with argon and the reaction mixture heated to 70°C and stirred at 400 rpm.

Samples were taken at regular time intervals via the sample liquid valve in order to monitor, by gravimetric analysis, the degree of conversion of the overall monomers and also the evolution of the *M*_{n, exp} of the polymer calculated from SEC analysis. Examples 14 and 15 were carried out following the same procedure as Example 13 replacing PAA3-TTC with PAA4-TTC (*M*_{n, exp} = 2100 g.mol⁻¹; n=31). No RAFT agent or surfactant was added to the reaction mixture in Example 16. The operating conditions as well as the characteristics of the resulting polymers are summarized in Table 5.

**Table 5**

| | | Ex. 13 | Ex. 14 | Ex. 15 | Ex. 16 |
|---|---|---|---|---|---|
| RAFT agent | | PAA3-T TC | PAA4-TTC | PAA4-T TC | - |
| *M*ₙ RAFT agent (g.mol⁻¹) | | 5000 | 2100 | 2100 | - |
| wt% monomers | | 25.1 | 25.1 | 25.2 | 25.2 |
| mol% MA | | 20.0 | 20.0 | 20.0 | 20.0 |
| [TSPP] (mmol.L_{aq}⁻¹) | | 31 | 31 | 31 | 31 |
| [ACPA]₀ (mmol.L_{aq}⁻¹) | | 3.9 | 3.9 | 3.9 | 3.9 |
| [RAFT-agent]₀ (mmol.L_{aq}⁻¹) | | 1.3 | 1.5 | 0.5 | 0 |
| n_{monomers,0}/n_{RAFT-agent,0} | | 2586 | 2152 | 6779 | - |
| n_{ACPA,0}/n_{RAFT-agent,0} | | 2.8 | 2.3 | 7.4 | - |
| m_{RAFT-agent,0}/m_{monomers,0} | | 2.0% | 1.0% | 0.3% | 0.0% |
| conversion (wt%) | | 99 | ≈ 100 | 86 | 21.3 |
| *M*_{n, exp} (kg.mol⁻¹) | | 53.6 | 44.8 | 64.8 | 24.9 |
| *M*_{w}/*M*ₙ | | 2.0 | 2.5 | 2.6 | 3.6 |
| *DL S analysis on polymer dispersion* | D_{Z} (nm) | 68 | 69 | 95 | 559 |
| | polydispersit y | 0.024 | 0.019 | 0.05 | 0.02 |
| Coagulum (wt%) | | 0.5 | 0.5 | 0.7 | A lot |

The stability of the latex is obtained for a ratio m_{macroRAFT agent}/mₘₒₙₒₘₑᵣₛ as low as 0.3% with PAA4-TTC. Moreover Example 13 shows that it is possible to obtain a surfactant-free latex with a PAA-TTC of a higher molar mass. In Example 16, lower conversion than in the presence of PAA-TTC is reached and the latex settled rapidly. We could not reach the stability without RAFT agent.

### Examples 17-19: Preparation of block copolymer PAA-b-poly(VDC-co -MA): emulsion polymerization of VDC/MA at 40% solids in the presence of PAA-TTC under pressure at 70°C

Examples 17 to 19 were carried out following the same procedure of Example 13 replacing PAA3-TTC with PAA4-TTC in Example 17 and PAA1-TTC in Examples 18 and 19, respectively. The operating conditions as well as the characteristics of the resulting polymers are summarized in The latex obtained in example 18 is whiter than the one of the example 17. For the same solid content, when the mol% of MA decreased, the stability is reached with higher ratio m_{RAFT-agent,0}/m_{monomers,0} of 0.75% and a higher amount of coagulum is obtained. The operating conditions as well as the characteristics of the resulting polymers are summarized in Table 6.

**Table 6**

| | | Ex. 17 | Ex. 18 | Ex. 19 |
|---|---|---|---|---|
| RAFT agent | | PAA4-TTC | PAA1-TTC | PAA1-T TC |
| *M*ₙ RAFT agent (g.mol⁻¹) | | 2100 | 2400 | 2400 |
| wt% monomers | | 40.6 | 40.4 | 40.0 |
| mol% MA | | 19.7 | 19.9 | 11.6 |
| [TSPP] (mmol.L_{aq}⁻¹) [ACPA]₀ (mmol.L_{aq}⁻¹) | | 37.6 | 37.5 | 37.7 |
| | | 3.9 | 3.8 | 3.9 |
| [RAFT-agent]₀ (mmol.L_{aq}⁻¹) | | 3.2 | 1.5 | 2.1 |
| n_{monomers,0}/n_{RAFT-agent,0} | | 2330 | 4804 | 3364 |
| n_{ACPA,0}/n_{RAFT-agent,0} | | 1.2 | 2.5 | 1.9 |
| m_{RAFT-agent,0}/m_{monomers, 0} | | 1.0% | 0.5% | 0.75% |
| conversion (wt%) | | 99.5 | 86.1 | 90.2 |
| *M*_{n, exp} (kg.mol⁻¹) | | 44.8 | 60.6 | 45.7 |
| *M*_{w}/*M*ₙ | | 2.4 | 2.2 | 2.3 |
| *DLS analysis on polymer dispersion* | D_{Z} (nm) | 69 | 97 | 82 |
| | polydispersity | 0.02 | 0.041 | 0.050 |
| Coagulum (wt%) | | 0.5 | 0.5 | 1.9 |

### Examples 20-21: Emulsion polymerization of VDC/MA at 40% of solid content in the presence of PSSNa-GC1 under pressure at 70°C

Examples 20 and 21 were carried out following the same procedure of Example 13 replacing PAA3-TTC with HO₂C-C(CH₃)-(CH₂-C(C₆H₆(SO₃-, Na⁺)))ₙ-S-C(S)-S-C₄H₉ (PSSNa-GC1) prepared from GC1 in water and recovered in THF (*M*_{n,th} = 2100 g.mol⁻¹ ; n=5).

The operating conditions as well as the characteristics of the resulting polymers are summarized in Table 7.

**Table 7**

| | | Example 20 | Example 21 |
|---|---|---|---|
| RAFT agent | | PSSNa-GC1 | PSSNa-GC1 |
| *M*ₙ RAFT agent (g.mol⁻¹) | | 2100 | 2100 |
| wt% monomers | | 40.5 | 40.7 |
| mol% MA | | 19.9 | 11.0 |
| [TSPP] (mmol.L_{aq}⁻¹) | | 0 | 0 |
| [ACPA]₀ (mmol.L_{aq}⁻¹) | | 3.9 | 3.9 |
| [RAFT-agent]₀ (mmol.L_{aq}⁻¹ ) | | 3.1 | 3.2 |
| n_{monomers,0}/n_{RAFT-agent,0} | | 2314 | 2293 |
| n_{ACPA,0}/n_{RAFT-agent,0} | | 1.2 | 1.2 |
| m_{RAFT-agent,0}/m_{monomers,0} | | 1.0% | 1.0% |
| conversion (wt%) | | 97 (2.3h) | 80 (2.5h) |
| *M*_{n, exp} (kg.mol⁻¹) | | - | - |
| *M*_{w}/*M*ₙ | | - | - |
| *DLS analysis on polymer dispersion* | D_{Z} (nm) | 69 | 73 |
| | polydispersity | 0.065 | 0.103 |
| Coagulum (wt%) | | 3.1 | 2.2 |

### Example 22: Preparation of block copolymer PAA-b-poly(VDC-co-MA)-b-poly(VDC-co-MA): emulsion polymerization of VDC/MA at 40% solids in the presence of PAA-b-poly(VDC-co-MA)-TTC under pressure at 70°C

Example 23 was carried out following the same procedure as Example 13 replacing PAA3-TTC with PAA-*b-*poly(VDC-*co*-MA)-TTC (*M*_{n, exp} = 5300 g.mol⁻¹) obtained in Example 10. The operating conditions as well as the characteristics of the resulting polymer are summarized in Table 8.

**Table 8**

| | | Example 22 |
|---|---|---|
| RAFT agent | | PAA-*b*-Poly(VDC-*co*-MA)-TTC |
| *M*ₙ RAFT agent (g.mol⁻¹) | | 5300 |
| wt% monomers | | 39.9 |
| mol% MA | | 20.2 |
| [TSPP] (mmol.L_{aq}⁻¹) | | 37.6 |
| [ACPA]₀ (mmol.L_{aq}⁻¹) | | 3.9 |
| [RAFT-agent]₀ (mmol.L_{aq}⁻¹) | | 1.43 |
| n_{monomers,0}/n_{RAFT-agent,0} | | 4992 |
| n_{ACPA,0}/n_{RAFT-agent,0} | | 2.7 |
| m_{RAFT-agent,0}/m_{monomers,0} | | 1.3% |
| conversion (wt%) | | 99 |
| *M*_{n, exp} (kg.mol⁻¹) | | 52.1 |
| *M*_{w}/*M*ₙ | | 2.2 |
| *DLS analysis on polymer dispersion* | D_{Z} (nm) | 93 |
| | polydispersity | 0.02 |
| Coagulum (wt%) | | 2.5 |

Example 23 shows that an amphiphilic VDC-based block copolymer is efficient as stabilizer and control agent in living emulsion polymerization of VDC.

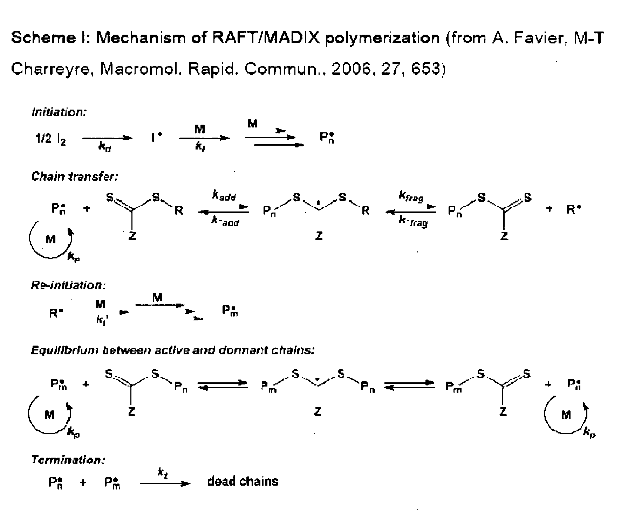

## Claims

1. A process for manufacturing a vinylidene chloride polymer comprising polymerising vinylidene chloride and optionally at least one ethylenically unsaturated monomer copolymerizable therewith under the control of a RAFT agent of formula (II): 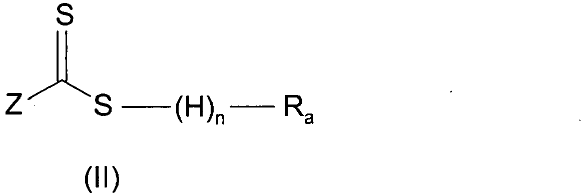 where Rₐ is an organic group optionally substituted with one or more hydrophilic groups; wherein -(H)ₙ- represents at least one polymer chain formed by any mechanism which is hydrophilic and comprises recurring units deriving from at least one ethylenically unsaturated monomer having hydrophilic character (h1) and comprising either cationic, anionic or non-ionic functional groups imparting said hydrophilic character and optionally from at least one ethylenically unsaturated monomer having hydrophobic character (h2) and n is an integer from 2 to 300; and Z is selected from the group consisting of optionally substituted alkoxy, optionally substituted aryloxy, optionally substituted heterocyclyl, optionally substituted alkylthio, optionally substituted arylalkylthio, dialkoxy- or diaryloxy- phosphinyl [-P(=O)(OR⁴)₂], dialkyl- or diaryl- phosphinyl [-P(=O)R⁴₂], where R⁴ is selected from the group consisting of optionally substituted C₁-C₁₈ alkyl, optionally substituted C₂-C₁₈ alkenyl, optionally substituted aryl, optionally substituted heterocyclyl, optionally substituted aralkyl, optionally substituted alkaryl, optionally substituted acylamino, optionally substituted acylimino, optionally substituted amino, a polymer chain formed by any mechanism; optionally substituted alkyl, preferably optionally substituted C₁-C₂₀ alkyl, optionally substituted aryl, and optionally substituted arylalkyl.

2. Process according to claim 1 wherein -(H)ₙ- in formula (II) is hydrophilic and it comprises recurring units deriving from at least one ethylenically unsaturated monomer (h1) selected among those comprising at least one carboxylic, sulfonic, sulfuric, phosphonic, phosphoric acid functional group, its salt or precursor thereof.

3. Process according to claim 2 wherein the at least one ethylenically unsaturated monomer having hydrophilic character (h1) contains functional groups whose corresponding acid has an acid dissociation constant pKa of less than 6.

4. Process according to claim 1 wherein in formula (II) -(H)ₙ- is an optionally substituted polyalkylene oxide chain.

5. Process according to anyone of claims 1 to 4 wherein the RAFT agent of formula (II) comprises in addition to at least one hydrophilic - (H)ₙ- block at least one block comprising recurring units deriving from vinylidene chloride.

6. Process according to anyone of the preceding claims wherein Z is selected from the group consisting of -SCH₂(C₆H₅), -S(CH₂)ᵤCO₂H wherein u is an integer from 2 to 11, -SC_{z}H_{2z+1} wherein z is an integer from 1 to 12, -SCH₂CH₂OH, -OCH₂CH₃, -OCH₂CF₃, -N(C₆H₅)(CH₃) and Rₐ is selected from the group consisting of: -CH(CH₃)CO₂H, - CH(CO₂H)CH₂CO₂H, -C(CH₃)₂CO₂H, -CH₂(C₆H₅), -C(CN)(CH₃)CO₂H, -C(CN)(CH₃)CH₂CH₂CO₂H.

7. Process according to anyone of the preceding claims which is carried out in a liquid medium.

8. Process according to anyone of the preceding claims which is carried out in water.

9. Process according to claim 7 or 8 which is a radical emulsion polymerization process.

10. A vinylidene chloride block polymer comprising at least one hydrophilic block -(H)ₙ- and at least one vinylidene chloride block-(V)ₘ-, wherein -(H)ₙ- is as defined in claims 1 to 4 and each V is a polymerised residue of vinylidene chloride and optionally of at least one ethylenically unsaturated monomer; and wherein m is an integer from 1 to 3000.

11. A composition comprising the vinylidene chloride block polymer of claim 10 and a polymer different from the vinylidene chloride block polymer.

12. A composition comprising the vinylidene chloride block polymer of claim 10 and a liquid phase.

13. Use of the vinylidene chloride block polymer of claim 10 in an emulsion polymerization process of vinylidene chloride and optionally at least one ethylenically unsaturated monomer copolymerizable with vinylidene chloride.

14. Use of the vinylidene chloride block polymer of claim 10 or of the composition of claim 11 or 12 for the preparation of coatings.

15. Use of the vinylidene chloride block polymer of claim 10 or of the composition of claim 11 for the preparation of films.

## Patentansprüche

1. Verfahren zur Herstellung eines Vinylidenchloridpolymers, bei dem man Vinylidenchlorid und gegebenenfalls mindestens ein damit copolymerisierbares ethylenisch ungesättigtes Monomer unter der Kontrolle eines RAFT-Agens der Formel (II) : 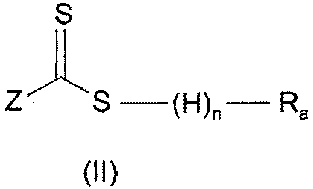 polymerisiert; wobei Rₐ für eine organische Gruppe, die gegebenenfalls durch eine oder mehrere hydrophile Gruppen substituiert ist, steht; wobei -(H)ₙ- für mindestens eine durch einen beliebigen Mechanismus gebildete Polymerkette steht, die hydrophil ist und Wiederholungseinheiten umfasst, die sich von mindestens einem ethylenisch ungesättigten Monomer mit hydrophilem Charakter (h1), das entweder kationische, anionische oder nichtionische funktionelle Gruppen, die den hydrophilen Charakter verleihen, umfasst, und gegebenenfalls von mindestens einem ethylenisch ungesättigten Monomer mit hydrophobem Charakter (h2) ableiten, und n für eine ganze Zahl von 2 bis 300 steht; und Z ausgewählt ist aus der Gruppe besthend aus gegebenenfalls substituiertem Alkoxy, gegebenenfalls substituiertem Aryloxy, gegebenenfalls substituiertem Heterocyclyl, gegebenenfalls substituiertem Alkylthio, gegebenenfalls substituiertem Arylalkylthio, Dialkoxy- oder Diaryloxyphosphinyl [-P(=O)(OR⁴)₂], Dialkyl- oder Diarylphosphinyl [-P(=O)R⁴₂], wobei R⁴ ausgewählt ist aus der Gruppe bestehend aus gegebenenfalls substituiertem C₁-C₁₈-Alkyl, gegebenenfalls substituiertem C₂-C₁₈-Alkenyl, gegebenenfalls substituiertem Aryl, gegebenenfalls substituiertem Heterocyclyl, gegebenenfalls substituiertem Aralkyl, gegebenenfalls substituiertem Alkaryl, gegebenenfalls substituiertem Acylamino, gegebenenfalls substituiertem Acylimino, gegebenenfalls substituiertem Amino, einer durch einen beliebigen Mechanismus gebildeten Polymerkette; gegebenenfalls substituiertem Alkyl, vorzugsweise gegebenenfalls substituiertem C₁-C₂₀-Alkyl, gegebenenfalls substituiertem Aryl und gegebenenfalls substituiertem Arylalkyl.

2. Verfahren nach Anspruch 1, wobei -(H)ₙ- in Formel (II) hydrophil ist und Wiederholungseinheiten umfasst, die sich von mindestens einem ethylenisch ungesättigten Monomer (h1), ausgewählt aus denjenigen, die mindestens eine Carbonsäure-, Sulfonsäure-, Schwefelsäure-, Phosphonsäure-, Phosphorsäurefunktionalität, ein Salz oder eine Vorstufe davon umfassen, ableiten.

3. Verfahren nach Anspruch 2, bei dem das mindestens eine ethylenisch ungesättigte Monomer mit hydrophilem Charakter (h1) Funktionalitäten enthält, deren korrespondierende Säure eine Säuredissoziationskonstante pKa von weniger als 6 aufweist.

4. Verfahren nach Anspruch 1, wobei in Formel (II) -(H)ₙ- für eine gegebenenfalls substituierte Polyalkylenoxidkette steht.

5. Verfahren nach einem der Ansprüche 1 bis 4, bei dem das RAFT-Agens der Formel (II) neben dem mindestens einen hydrophilen -(H)ₙ Block mindestens einen Block umfasst, der Wiederholungseinheiten, die sich von Vinylidenchlorid ableiten, umfasst.

6. Verfahren nach einem der vorhergehenden Ansprüche, bei dem Z ausgewählt ist aus der Gruppe bestehend aus -SCH₂(C₆H₅), -S(CH₂)ᵤCO₂H, wobei u für eine ganze Zahl von 2 bis 11 steht, -SC_{z}H_{2z+1}, wobei z für eine ganze Zahl von 1 bis 12 steht, -SCH₂CH₂OH, -OCH₂CH₃, -OCH₂CF₃, -N(C₆H₅)(CH₃) und Rₐ ausgewählt ist aus der Gruppe bestehend aus -CH(CH₃)CO₂H, -CH(CO₂H)CH₂CO₂H, -C(CH₃)₂CO₂H, -CH₂(C₆H₅), -C(CN)(CH₃)CO₂H, -C(CN)(CH₃)(CH₂)₂CO₂H.

7. Verfahren nach einem der vorhergehenden Ansprüche, das in einem flüssigen Medium durchgeführt wird.

8. Verfahren nach einem der vorhergehenden Ansprüche, das in Wasser durchgeführt wird.

9. Verfahren nach Anspruch 7 oder 8, bei dem es sich um eine radikalische Emulsionspolymerisation handelt.

10. Vinylidenchlorid-Blockpolymer, umfassend mindestens einen hydrophilen Block -(H)ₙ- und mindestens einen Vinylidenchloridblock -(V)ₘ-, wobei -(H)ₙ- wie in den Ansprüchen 1 bis 4 definiert ist und V jeweils für einen polymerisierten Rest von Vinylidenchlorid und gegebenenfalls mindestens einem ethylenisch ungesättigten Monomer steht; und wobei m für eine ganze Zahl von 1 bis 3000 steht.

11. Zusammensetzung, umfassend das Vinylidenchlorid-Blockpolymer gemäß Anspruch 10 und ein Polymer, das von dem Vinylidenchlorid-Blockpolymer verschieden ist.

12. Zusammensetzung, umfassend das Vinylidenchlorid-Blockpolymer gemäß Anspruch 10 und eine flüssige Phase.

13. Verwendung des Vinylidenchlorid-Blockpolymers gemäß Anspruch 10 bei einem Verfahren zur Emulsionspolymerisation von Vinylidenchlorid und gegebenenfalls mindestens einem ethylenisch ungesättigten Monomer, das mit Vinylidenchlorid copolymerisierbar ist.

14. Verwendung des Vinylidenchlorid-Blockpolymers gemäß Anspruch 10 oder der Zusammensetzung gemäß Anspruch 11 oder 12 zur Herstellung von Überzügen.

15. Verwendung des Vinylidenchlorid-Blockpolymers gemäß Anspruch 10 oder der Zusammensetzung gemäß Anspruch 11 zur Herstellung von Folien.

## Revendications

1. Procédé de fabrication d'un polymère de chlorure de vinylidène comprenant la polymérisation de chlorure de vinylidène et optionnellement d'au moins un monomère éthyléniquement insaturé copolymérisable avec celui-ci sous le contrôle d'un agent RAFT de formule (II) : 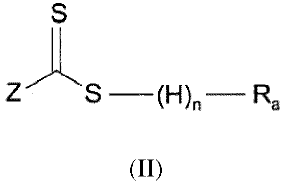 où Rₐ est un groupe organique optionnellement substitué par un ou plusieurs groupes hydrophiles ; dans lequel -(H)ₙ- représente au moins une chaîne polymère formée par n'importe quel mécanisme qui est hydrophile et comprend des motifs récurrents dérivant d'au moins un monomère éthyléniquement insaturé ayant un caractère hydrophile (h1) et comprenant des groupes fonctionnels cationiques, anioniques ou non ioniques conférant ledit caractère hydrophile et optionnellement d'au moins un monomère éthyléniquement insaturé ayant un caractère hydrophobe (h2) et n est un entier de 2 à 300 ; et Z est choisi dans le groupe constitué par un alcoxy optionnellement substitué, un aryloxy optionnellement substitué, un hétérocyclyle optionnellement substitué, un alkylthio optionnellement substitué, un arylalkylthio optionnellement substitué, un dialcoxy- ou diaryloxy-phosphinyle [-P(=O)(OR⁴)₂], un dialkyl- ou diaryl-phosphinyle [-P(=O)R⁴₂], où R⁴ est choisi dans le groupe constitué par un alkyle en C₁-C₁₈ optionnellement substitué, un alcényle en C₂-C₁₈ optionnellement substitué, un aryle optionnellement substitué, un hétérocyclyle optionnellement substitué, un aralkyle optionnellement substitué, un alcaryle optionnellement substitué, un acylamino optionnellement substitué, un acylimino optionnellement substitué, un amino optionnellement substitué, une chaîne polymère formée par n'importe quel mécanisme ; un alkyle optionnellement substitué, de préférence un alkyle en C₁-C₂₀ optionnellement substitué, un aryle optionnellement substitué, et un arylalkyle optionnellement substitué.

2. Procédé selon la revendication 1 dans lequel -(H)ₙ- dans la formule (II) est hydrophile et il comprend des motifs récurrents dérivant d'au moins un monomère éthyléniquement insaturé (h1) choisi parmi ceux comprenant au moins un groupe fonctionnel acide carboxylique, sulfonique, sulfurique, phosphonique, phosphorique, son sel ou un précurseur de celui-ci.

3. Procédé selon la revendication 2 dans lequel l'au moins un monomère éthyléniquement insaturé ayant un caractère hydrophile (h1) contient des groupes fonctionnels dont l'acide correspondant à une constante de dissociation acide pKa inférieure à 6.

4. Procédé selon la revendication 1 dans lequel, dans la formule (II), -(H)ₙ- est une chaîne d'oxyde de polyalkylène optionnellement substituée.

5. Procédé selon l'une quelconque des revendications 1 à 4 dans lequel l'agent RAFT de formule (II) comprend en plus d'au moins un bloc -(H)ₙ-hydrophile au moins un bloc comprenant des motifs récurrents dérivant du chlorure de vinylidène.

6. Procédé selon l'une quelconque des revendications précédentes dans lequel Z est choisi dans le groupe constitué par -SCH₂(C₆H₅), -S(CH₂)ᵤCO₂H dans lequel u est un entier de 2 à 11, -SC_{z}H_{2z+1} dans lequel z est un entier de 1 à 12, -SCH₂CH₂OH, -OCH₂CH₃, -OCH₂CF₃, -N(C₆H₅)(CH₃) et Rₐ est choisi dans le groupe constitué par : -CH(CH₃)CO₂H, -CH(CO₂H)CH₂CO₂H, -C(CH₃)₂CO₂H, -CH₂(C₆H₅), -C(CN)(CH₃)CO₂H, -C(CN)(CH₃)CH₂CH₂CO₂H.

7. Procédé selon l'une quelconque des revendications précédentes qui est réalisé dans un milieu liquide.

8. Procédé selon l'une quelconque des revendications précédentes qui est réalisé dans de l'eau.

9. Procédé selon la revendication 7 ou 8 qui est un procédé de polymérisation radicalaire en émulsion.

10. Polymère séquencé de chlorure de vinylidène comprenant au moins un bloc hydrophile -(H)ₙ- et au moins un bloc de chlorure de vinylidène -(V)ₘ-, dans lequel -(H)ₙ- est tel que défini dans les revendications 1 à 4 et chaque V est un résidu polymérisé de chlorure de vinylidène et optionnellement d'au moins un monomère éthyléniquement insaturé ; et dans lequel m est un entier de 1 à 3000.

11. Composition comprenant le polymère séquencé de chlorure de vinylidène de la revendication 10 et un polymère différent du polymère séquencé de chlorure de vinylidène.

12. Composition comprenant le polymère séquencé de chlorure de vinylidène de la revendication 10 et une phase liquide.

13. Utilisation du polymère séquencé de chlorure de vinylidène de la revendication 10 dans un procédé de polymérisation en émulsion de chlorure de vinylidène et optionnellement d'au moins un monomère éthyléniquement insaturé copolymérisable avec le chlorure de vinylidène.

14. Utilisation du polymère séquencé de chlorure de vinylidène de la revendication 10 ou de la composition de la revendication 11 ou 12 pour la préparation de revêtements.

15. Utilisation du polymère séquencé de chlorure de vinylidène de la revendication 10 ou de la composition de la revendication 11 pour la préparation de films.
